# EUROPÄISCHE PATENTANMELDUNG

(11) **EP 4 624 101 A1**
(43) Veröffentlichungstag der Anmeldung: **01.10.2025**
(21) Anmeldenummer: 25162553.9
(22) Anmeldetag: 10.03.2025
(51) Int. Cl.: B25F 5/00, B25B 21/02, B25B 23/14, B25B 23/147

(54) **HANDWERKZEUGMASCHINE**

(30) Priorität: 26.03.2024 DE 102024202880
(71) Anmelder: Robert Bosch GmbH, 70442 Stuttgart (DE)
(72) Erfinder: Roehm, Heiko, 70176 Stuttgart (DE); Herr, Tobias, 71120 Grafenau (DE); Blum, Jens, 70794 Filderstadt (DE); Hartmann, Cornelius, 71297 Moensheim (DE); Schuller, Marcus, 72135 Dettenhausen (DE); Britz, Rainer, 73614 Schorndorf (DE)

(57) **Zusammenfassung**

Es wird eine Handwerkzeugmaschine (100) mit einem Gehäuse (110), mit einem Antriebsmotor (114), der eine Antriebswelle (116) aufweist, mit einem mittels der Antriebswelle (116) antreibbaren Getriebe (118), wobei das Getriebe (118) ein Getriebegehäuse (119), einen Getriebedeckel (136) und ein Festhohlrad (129) aufweist, wobei der Getriebedeckel (136) das Getriebegehäuse (119) zumindest abschnittsweise verschließt, und mit einer Werkzeugaufnahme (150) zur Aufnahme eines Einsatzwerkzeugs (140), wobei die Werkzeugaufnahme (150) mittels des Getriebes (118) antreibbar ist, offenbart.

Es wird vorgeschlagen, dass das Festhohlrad (129) derart angeordnet ist, dass das Festhohlrad (129) ein Losbrechmoment aufweist.

## Beschreibung

Die vorliegende Erfindung betrifft eine Handwerkzeugmaschine nach dem Oberbegriff des Anspruches 1.

### Stand der Technik

Aus der DE 10 2017 211 774 A1 ist bereits eine Handwerkzeugmaschine mit einem Antriebsmotor, mit einem Getriebe und einem Getriebedeckel bekannt.

### Offenbarung der Erfindung

Die vorliegende Erfindung geht aus von einer Handwerkzeugmaschine mit einem Gehäuse, mit einem Antriebsmotor, der eine Antriebswelle aufweist, mit einem mittels der Antriebswelle antreibbaren Getriebe, wobei das Getriebe ein Getriebegehäuse, einen Getriebedeckel und ein Festhohlrad aufweist, wobei der Getriebedeckel das Getriebegehäuse zumindest abschnittsweise verschließt, und mit einer Werkzeugaufnahme zur Aufnahme eines Einsatzwerkzeugs, wobei die Werkzeugaufnahme mittels des Getriebes antreibbar ist. Es wird vorgeschlagen, dass das Festhohlrad derart angeordnet ist, dass das Festhohlrad ein Losbrechmomentaufweist.

Die Erfindung stellt eine Handwerkzeugmaschine mit einer Rutschkupplung bereit, bei der das Festhohlrad derart angeordnet ist, dass das Festhohlrad das Losbrechmoment aufweist. Die Rutschkupplung ermöglicht dabei, dass ein blockierendes Getriebe im Wesentlichen verhindert werden kann. Bei einem Betrieb der Handwerkzeugmaschine kann es zu Betriebszuständen kommen, bei denen das Getriebe blockiert. Dabei dreht der Antriebsmotor jedoch weiter, sodass das Getriebe und/oder die Werkzeugaufnahme in dem blockierten Betriebszustand Schäden erhalten würde. Um dies zu vermeiden, wird die Rutschkupplung vorgeschlagen, bei der das Festhohlrad das Losbrechmoment aufweist

, das kleiner oder gleich dem maximalen Drehmoment ist. Die Rutschkupplung kann dabei zwischen dem Festhohlrad und dem Getriebedeckel und/oder zwischen dem Festhohlrad und dem Getriebegehäuse angeordnet und/oder ausgebildet sein.

Die Handwerkzeugmaschine kann als eine elektrisch betriebene Handwerkzeugmaschine ausgebildet sein. Die elektrisch betriebene Handwerkzeugmaschine kann dabei als eine netzbetriebene oder als eine akkubetriebe Handwerkzeugmaschine ausgebildet sein. Beispielsweise kann die Handwerkzeugmaschine als ein Schrauber, ein Bohrschrauber, ein Drehschlagschrauber, ein Hammer, ein Bohrhammer, oder ein Schlagbohrschrauber ausgebildet sein.

Das Gehäuse der Handwerkzeugmaschine ist dazu ausgebildet, zumindest teilweise den Antriebsmotor, das Getriebe und die Werkzeugaufnahme aufzunehmen. Das Gehäuse kann als ein Schalengehäuse mit zwei Halbschalen ausgebildet sein.

Die Handwerkzeugmaschine weist die Werkzeugaufnahme auf. Die Werkzeugaufnahme kann als eine Werkzeuginnenaufnahme, wie beispielsweise eine Bitaufnahme, und/oder als eine Werkzeugaußenaufnahme, wie beispielsweise eine Nussaufnahme, ausgebildet sein. Es ist auch denkbar, dass die Werkzeugaufnahme als ein Bohrfutter ausgebildet ist. Die Werkzeugaufnahme kann Einsatzwerkzeuge, wie beispielsweise Schraubbits oder Steckschlüssel, aufnehmen, sodass ein Benutzer Schraubverbindungen von einem Befestigungselement mit einem Befestigungsträger herstellen kann.

Die Handwerkzeugmaschine weist eine Antriebseinheit auf. Die Antriebseinheit umfasst den Antriebsmotor und das Getriebe. Der Antriebsmotor kann ein elektrisch kommutierter Antriebsmotor sein. Der Antriebsmotor kann insbesondere als zumindest ein Elektromotor ausgebildet sein. Das Getriebe umfasst das Getriebegehäuse, den Getriebedeckel und das Festhohlrad. Das Getriebe kann als zumindest ein Planetengetriebe ausgebildet sein, wobei es beispielsweise schaltbar sein kann. Das Planetengetriebe kann zumindest einen Planetenträger und Planetenräder aufweisen. Das Festhohlrad kann bei dem Getriebedeckel angeordnet sein. Das Festhohlrad ist ein in zumindest einem Zustand feststehendes Hohlrad. Dabei kann das Festhohlrad einer ersten und/oder zweiten Getriebestufe des Getriebes zugeordnet sein. Das Festhohlrad kann in Richtung zu dem Antriebsmotor angeordnet sein. Bei einem schaltbaren Getriebe kann zwischen zumindest zwei Gangstufen mittels zumindest eines Gangumschaltelements, insbesondere eines Gangumschalters, umgeschaltet werden. Der Antriebsmotor ist derart ausgestaltet, dass er über einen Handschalter betätigbar ist. Wird der Handschalter durch einen Benutzer betätigt, wird der Antriebsmotor eingeschalten und die Handwerkzeugmaschine wird in Betrieb genommen. Wird entsprechend der Handschalter durch den Benutzer nicht weiter betätigt, wird der Antriebsmotor ausgeschalten. Bevorzugt ist der Antriebsmotor derart elektronisch steuer- und/oder regelbar, dass ein Reversierbetrieb und eine Vorgabe für eine gewünschte Drehgeschwindigkeit realisierbar sind. Im Reversierbetrieb kann der Antriebsmotor zwischen einer Rechtslaufdrehrichtung und einer Linkslaufdrehrichtung umschaltbar sein. Zur Umschaltung des Antriebsmotors im Reversierbetrieb kann die Handwerkzeugmaschine ein Drehrichtungsumschaltelement, insbesondere einen Drehrichtungsumschalter, aufweisen.

Die Handwerkzeugmaschine kann ein Schlagwerk aufweisen. Das Schlagwerk erzeugt während des Betriebs hohe Drehmomentspitzen, um so festsitzende Verbindungsmittel zu lösen oder Verbindungsmittel zu befestigen oder Löcher zu bohren. Das Schlagwerk kann mittels des Getriebes mit dem Antriebsmotor verbunden sein. Das Schlagwerk kann beispielsweise als ein Rotationsschlagwerk, ein Rastenschlagwerk, ein Drehschlagwerk, ein V-Nuten-Schlagwerk oder ein Hammerschlagwerk ausgebildet sein. Das Getriebe und/oder das Schlagwerk kann eine Zwischenwelle aufweisen. Beispielsweise kann die Zwischenwelle die Planetenräder des Getriebes aufnehmen. Weiter kann die Zwischenwelle das Schlagwerk zumindest teilweise antreiben. Das Schlagwerk kann ein Schlagwerkgehäuse und/oder einen Schlagwerkdeckel aufweisen. Weiter kann das Schlagwerk zumindest einen Schläger und zumindest eine Schlagwerkfeder aufweisen. Dabei können die der Schläger und die Schlagwerkfeder im Wesentlichen innerhalb des Schlagwerkgehäuses angeordnet sein. Die Schlagwerkfeder kann beispielhaft als eine Spiralfeder, eine tonnenförmige Feder, eine Kegelfeder, eine Kaminfeder oder eine Profilfeder ausgebildet sein. Der Schlagwerkdeckel kann, insbesondere axial, zwischen dem Schlagwerk, insbesondere dem Schläger und der Schlagwerkfeder, und dem Antriebsmotor angeordnet sein. Es ist denkbar, dass der Schlagwerkdeckel und das Getriebegehäuse einstückig sind. Weiter ist denkbar, dass der Schlagwerkdeckel und der Getriebedeckel einstückig sind.

Der Antriebsmotor weist die Antriebswelle auf. Die Antriebswelle ist mittels zumindest eines Antriebswellenlagers im Gehäuse gelagert. Der Antriebsmotor kann mittels der Antriebswelle das Getriebe, das Schlagwerk und/oder die Werkzeugaufnahme antreiben. Das Antriebswellenlager kann beispielhaft als ein Kugellager, ein Wälzlager oder ein Gleitlager ausgebildet sein. Das Antriebswellenlager kann an einem zu der Werkzeugaufnahme zugewandten Ende des Antriebsmotor angeordnet sein. Das Antriebswellenlager kann, insbesondere axial, zwischen dem Getriebe und dem Antriebsmotor angeordnet sein. Die Antriebswelle kann in die Zwischenwelle hineinragen. Das Antriebswellenlager kann in der Zwischenwelle angeordnet sein, sodass die Antriebswelle mittels des Antriebswellenlagers in der Zwischenwelle gelagert ist. Zudem kann ein weiteres Antriebswellenlager zur Lagerung der Antriebswelle vorgesehen sein. Das weitere Antriebswellenlager kann an dem von der Werkzeugaufnahme abgewandten Ende des Antriebsmotors angeordnet. Das weitere Antriebswellenlager kann beispielhaft als ein Kugellager, ein Wälzlager oder ein Gleitlager ausgebildet sein. Die Handwerkzeugmaschine kann eine Werkzeugachse aufweisen. Dabei kann eine Rotationsachse der Antriebswelle die Werkzeugachse ausbilden. Insbesondere soll als "axial" im Wesentlichen parallel zur Werkzeugachse verstanden werden. Wohingegen als "radial" im Wesentlichen senkrecht zur Werkzeugachse verstanden werden soll.

Das Getriebe weist den Getriebedeckel auf, der das Getriebe zumindest abschnittsweise verschließt. Der Getriebedeckel kann axial zwischen dem Schlagwerk und dem Antriebsmotor angeordnet sein. Weiter kann der Getriebedeckel axial zwischen der zumindest einen Planetenstufe und dem Antriebsmotor angeordnet sein. Der Getriebedeckel kann das Festhohlrad des Getriebes, insbesondere des Planetengetriebes, aufnehmen. Beispielhaft kann der Getriebedeckel nach Art eines Topfes, einer Schale, eines Deckels oder einer Scheibe ausgebildet sein.

In einer Ausführungsform sind das Festhohlrad und der Getriebedeckel einstückig. Hierbei bildet der Getriebedeckel das Festhohlrad derart aus, dass sie aus einem Stück sind

In einer Ausführungsform sind das Festhohlrad und das Getriebegehäuse einstückig. So formt das Getriebegehäuse das Festhohlrad derart aus, dass sie aus einem Stück sind.

In einer Ausführungsform liegt das Festhohlrad an dem Getriebedeckel und/oder dem Getriebegehäuse an. So kann das Festhohlrad direkt und unmittelbar an dem Getriebedeckel und/oder dem Getriebegehäuse anliegen.

In einer Ausführungsform weist das Festhohlrad zumindest ein Steckelement auf und das Getriebe, insbesondere der Getriebedeckel und/oder das Getriebegehäuse, umfasst zumindest ein Steckaufnahmeelement, wobei die Steckaufnahme dazu ausgebildet ist, das Steckelement aufzunehmen. Das Steckelement kann radial und/oder axial an dem Festhohlrad ausgebildet sein. Es ist denkbar, dass das Steckelement form-, kraft- und/oder stoffschlüssig mit dem Festhohlrad verbunden ist. Es ist möglich, dass das Steckelement einstückig mit dem Festhohlrad ist. Beispielsweise kann das Steckelement nach Art eines Stegs, eines Vorsprungs, teilweise umlaufend, kronenartig oder kranzartig ausgebildet sein. Beispielsweise kann mehr als ein Steckelement ausgebildet sein, wie zwei, drei, vier oder mehr als vier Steckelemente. Das Steckaufnahmeelement kann komplementär zu dem Steckelement ausgebildet sein. Der Getriebedeckel kann mit dem Steckaufnahmeelement form-, kraft- und/oder stoffschlüssig verbunden sein. Zudem kann das Steckaufnahmeelement einstückig mit dem Getriebedeckel sein. Beispielsweise kann das Steckaufnahmeelement als eine Aussparung, eine Ausbuchtung, eine Ausnahme, eine Nut oder eine teilweise umlaufende Nut ausgebildet sein. Mittels des Steckelements und des Steckaufnahmeelements kann das Festhohlrad dann in das Getriebe, insbesondere dem Getriebedeckel und/oder dem Getriebegehäuse, eingesteckt sein. Es ist auch möglich, dass das Getriebegehäuse das Steckelement ausbildet und das Festhohlrad das Steckaufnahmeelement.

Die Handwerkzeugmaschine kann eine Drehmomentkupplung aufweisen. Die Drehmomentkupplung kann einstellbar ausgebildet sein, wobei der Benutzer mittels eines Einstellrings gewünschte Drehmomente einstellen kann. Die Drehmomentkupplung ist derart ausgebildet, dass diese auslöst, wenn das gewünschte Drehmoment erreicht ist. Die Drehmomentkupplung kann axial zwischen der Werkzeugaufnahme und dem Getriebe angeordnet sein.

Zusätzlich umfasst die Handwerkzeugmaschine eine Energieversorgung, wobei die Energieversorgung für einen Akkubetrieb mittels Akkus, insbesondere Handwerkzeugmaschinenakkupacks, und/oder für einen Netzbetrieb vorgesehen ist. In einer bevorzugten Ausführungsform ist die Energieversorgung für den Akkubetrieb ausgebildet. Im Rahmen der vorliegenden Erfindung soll unter einem "Handwerkzeugmaschinenakkupack" ein Zusammenschluss von zumindest einer Akkuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet. Die zumindest eine Akkuzelle kann beispielsweise als eine Lilon-Akkuzelle mit einer Nennspannung von 3,6 V ausgebildet sein. Beispielhaft kann der Handwerkzeugmaschinenakkupack bis zu zehn Akkuzellen umfassen, wobei auch eine andere Anzahl von Akkuzellen denkbar ist. Eine Ausführungsform als akkubetriebene Handwerkzeugmaschine als auch der Betrieb als netzbetriebene Handwerkzeugmaschine sind dem Fachmann hinreichend bekannt, weshalb hier nicht auf die Einzelheiten der Energieversorgung eingegangen wird.

Die Handwerkzeugmaschine kann eine Steuereinheit zumindest zur Steuerung der Antriebseinheit aufweisen. Die Steuereinheit kann in dem Gehäuse, beispielsweise in einem Handgriff der Handwerkzeugmaschine oder in einem Bereich einer Energieversorgungsschnittstelle, angeordnet sein.

In einer Ausführungsform der Handwerkzeugmaschine ist das Losbrechmoment des Festhohlrads kleiner oder gleich einem maximalen Drehmoment. Das Festhohlrad ist derart angeordnet, dass das Losbrechmoment des Festhohlrads kleiner oder gleich dem maximalen Drehmoment, insbesondere der Handwerkzeugmaschine, reduziert um eine Getriebeübersetzung, ist. Das Festhohlrad kann so gelagert sein, dass das Losbrechmoment kleiner oder gleich 80% des maximalen Drehmoments sein kann. Es ist denkbar, dass das Losbrechmoment des Festhohlrads einstellbar ist. Weiter ist es denkbar, dass das Festhohlrad ab einem Drehmomentwert von kleiner 80% des maximalen Drehmoments überrastet. Dabei ist das Losbrechmoment jenes Moment, ab dem das Festhohlrad zumindest teilweise bewegbar ist. So kann sich das Festhohlrad zumindest teilweise bewegen, sobald das Losbrechmoment erreicht ist. Das maximale Drehmoment kann sich beispielsweise zusammen setzen aus einer Schwungmasse der Ankerwelle, einer Schwungmasse der Zwischenwelle und/oder einer Schwungmasse der Planeten des Planetengetriebes. Es ist auch denkbar, dass das maximale Drehmoment auf eine Festhohlradabstützung festlegbar ist. Das maximale Drehmoment kann dann um eine Getriebeübersetzung reduziertes Abgabemoment der Handwerkzeugmaschine sein.

In einer Ausführungsform der Handwerkzeugmaschine ist das Festhohlrad relativ zu dem Antriebsmotor, insbesondere eines Stators des Antriebsmotors, zumindest teilweise drehbar. Das Festhohlrad kann sich dann derart relativ zu dem Antriebsmotor, insbesondere dem Stator des Antriebsmotors, zumindest teilweise drehen, um dem blockierten Betriebszustand entgegenzuwirken. Der Antriebsmotor weist den Stator und einen Rotor auf. Der Stator ist dabei gehäusefest in dem Gehäuse angeordnet. Der Rotor kann mit der Antriebswelle verbunden sein. Zudem kann der Rotor Rotormagnete aufweisen.

In einer Ausführungsform der Handwerkzeugmaschine ist das Festhohlrad relativ zu dem Getriebegehäuse zumindest teilweise drehbar ausgebildet ist. Das Festhohlrad kann sich dann derart relativ zu dem Getriebegehäuse zumindest teilweise drehen, um dem blockierten Betriebszustand entgegenzuwirken.

In einer Ausführungsform ist das Festhohlrad relativ zu dem Getriebedeckel zumindest teilweise drehbar ausgebildet. Das Festhohlrad kann sich dann derart relativ zu dem Getriebedeckel zumindest teilweise drehen, um dem blockierten Betriebszustand entgegenzuwirken.

In einer Ausführungsform weist die Handwerkzeugmaschine zumindest ein Festlegungselement auf, das dazu ausgebildet ist, in zumindest ein Rastelement des Festhohlrads zumindest teilweise einzugreifen. Das Festhohlrad weist das Rastelement auf. Das Rastelement kann form-, kraft- und/oder stoffschlüssig mit dem Festhohlrad verbunden sein. Es ist denkbar, dass das Rastelement einstückig mit dem Festhohlrad ist. Das Festlegungselement ist dazu ausgebildet, in das Rastelement zumindest teilweise einzugreifen und das Festhohlrad zumindest teilweise festzulegen. Das Festlegungselement kann dabei derart ausgebildet sein, dass bei einem Überschreiten des Losbrechmoments, das Festlegungselement das Festhohlrad freigibt. Anschließend kann sich das Festhohlrad zumindest teilweise bewegen, insbesondere zumindest teilweise drehen. Beispielhaft können ein, zwei oder mehr als zwei Festlegungselemente ausgebildet sein. Dabei können zumindest zwei der Festlegungselemente gegenüberliegend zueinander angeordnet sein. Das Festlegungselement kann beispielsweise als eine Blattfeder oder eine Kugel mit einer Spiralfeder ausgebildet sein. Das Festlegungselement kann zwischen dem Gehäuse und dem Festhohlrad angeordnet sein. Dabei kann das Festlegungselement beispielsweise radial zwischen dem Festhohlrad und dem Gehäuse angeordnet sein. Weiter kann das Festlegungselement axial zwischen dem Festhohlrad und dem Gehäuse angeordnet sein. Das Festhohlrad weist das Rastelement auf. Das Festhohlrad und das Rastelement können form-, kraft- und/oder stoffschlüssig miteinander verbunden sein. Es ist möglich, dass das Festhohlrad und das Rastelement einstückig sind. Das Rastelement kann beispielswiese in Form von Einbuchtungen, nach Art eines Kronenrads, nach Art eines Kranzes oder zahnradartig ausgebildet sein.

In einer Ausführungsform ist das Rastelement radial an dem Festhohlrad ausgebildet. Dabei ist das Rastelement radial zur Werkzeugachse bzw. zur Antriebswelle an dem Festhohlrad ausgebildet. Das Rastelement kann hier beispielsweise nach Art eines Zahnkranzes ausgebildet sein. Das Festlegungselement kann hier radial zwischen dem Festhohlrad und dem Gehäuse angeordnet sein. Dabei kann das Festlegungselement beispielsweise als eine Blattfeder ausgebildet sein.

In einer Ausführungsform ist das Rastelement axial an dem Festhohlrad ausgebildet. Dabei ist das Rastelement axial zur Werkzeugachse bzw. zur Antriebswelle an dem Festhohlrad ausgebildet. Hier kann das Rastelement beispielsweise nach Art eines Kronenrads ausgebildet sein. Das Festlegungselement kann axial zwischen dem Festhohlrad und dem Gehäuse oder dem Antriebsmotor angeordnet sein. Das Festlegungselement kann hier beispielsweise als eine Einzahl oder eine Mehrzahl an Blattfedern oder als eine Einzahl oder Mehrzahl an Kugeln mit Spiralfedern ausgebildet sein, wobei eine Anzahl an den Kugeln und den Spiralfedern gleich sein kann.

In einer Ausführungsform weist der Handwerkzeugmaschine zumindest ein Vorspannelement, das dazu ausgebildet ist, das Festhohlrad zumindest teilweise vorzuspannen. Das Vorspannelement ist dazu ausgebildet, das Festhohlrad derart vorzuspannen, dass das Losbrechmoment einstellbar ist. So kann beispielsweise das Losbrechmoment mittels unterschiedlicher Arten und/oder Materialzusammensetzungen des Vorspannelements eingestellt werden. Zudem ist das Vorspannelement derart ausgebildet, dass es das Festhohlrad derart vorspannt, dass beim Erreichen des Losbrechmoments das Festhohlrad zumindest teilweise bewegbar, insbesondere zumindest teilweise drehbar, ist.

In einer Ausführungsform der Handwerkzeugmaschine ist das Vorspannelement als zumindest ein Federelement, wie beispielsweise eine Blattfeder, eine Spiralfeder, ein visko-elastisches Element oder ein visko-elastischer Ring, und/oder als zumindest ein Dichtungselement ausgebildet. Das Federelement kann beispielsweise ringförmig oder mehreckig ausgebildet sein. Das Dichtungselement kann beispielsweise ringförmig oder mehreckig ausgebildet sein. Beispielsweise kann das Losbrechmoment durch verschiedene Federraten, Elastizitätsmodule, Durchmesser, Oberflächenbeschaffenheiten und/oder Haftreibungskoeffizienten des Vorspannelements eingestellt werden.

In einer Ausführungsform der Handwerkzeugmaschine ist das Vorspannelement zwischen dem Getriebedeckel und dem Getriebegehäuse angeordnet. Das Vorspannelement kann axial zur Werkzeugachse bzw. zur Antriebswelle zwischen dem Getriebedeckel und dem Getriebegehäuse angeordnet sein. Zudem kann das Vorspannelement auch radial zur Werkzeugachse bzw. zur Antriebswelle zwischen dem Getriebedeckel und dem Getriebegehäuse angeordnet sein. Dabei kann das Vorspannelement den Getriebedeckel relativ zu dem Getriebegehäuse vorspannen. Das Vorspannelement kann an dem Getriebedeckel und dem Getriebegehäuse anliegen. Hierdurch kann das Vorspannelement dann auch als eine Dichtung zwischen dem Getriebedeckel und dem Getriebegehäuse wirken.

In einer Ausführungsform der Handwerkzeugmaschine ist das Vorspannelement zwischen dem Getriebedeckel und dem Gehäuse angeordnet. Das Vorspannelement kann radial zur Werkzeugachse bzw. zur Antriebswelle zwischen dem Getriebedeckel und dem Gehäuse angeordnet sein. Weiter kann das Vorspannelement axial zur Werkzeugachse bzw. zur Antriebswelle zwischen dem Getriebedeckel und dem Gehäuse angeordnet sein. Hierzu kann der Getriebedeckel eine Aufnahme für das Vorspannelement aufweisen. Die Aufnahme für das Vorspannelement kann beispielsweise als eine, insbesondere zumindest teilweise umlaufende, Nut oder eine Ringnut ausgebildet sein. Zudem kann die Aufnahme für das Vorspannelement radial und/oder axial an dem Getriebedeckel ausgebildet sein.

In einer Ausführungsform der Handwerkzeugmaschine ist das Vorspannelement zwischen dem Festhohlrad und dem Getriebegehäuse angeordnet. Das Vorspannelement kann radial zur Werkzeugachse bzw. der Antriebswelle zwischen dem Festhohlrad und dem Getriebegehäuse angeordnet sein. Zudem kann das Vorspannelement axial zur Werkzeugachse bzw. zur Antriebswelle zwischen dem Festhohlrad und dem Getriebegehäuse angeordnet sein. Das Festhohlrad und/oder das Getriebegehäuse kann hierfür jeweils eine Aufnahme aufweisen, die radial und/oder axial an dem Festhohlrad und/oder dem Getriebegehäuse ausgebildet ist.

In einer Ausführungsform der Handwerkzeugmaschine ist das Vorspannelement zwischen dem Festhohlrad und dem Getriebedeckel angeordnet. Das Vorspannelement kann radial zur Werkzeugachse bzw. zur Antriebswelle zwischen dem Festhohlrad und dem Getriebedeckel angeordnet sein. Zudem kann das Vorspannelement axial zur Werkzeugachse bzw. zur Antriebswelle zwischen dem Festhohlrad und dem Getriebegehäuse angeordnet sein. Das Festhohlrad und/oder der Getriebedeckel kann hierfür jeweils eine Aufnahme aufweisen, die axial und/oder radial an dem Festhohlrad und/oder Getriebedeckel ausgebildet ist.

In einer Ausführungsform der Handwerkzeugmaschine ist das Vorspannelement zwischen dem Festhohlrad und dem Gehäuse angeordnet. Das Vorspannelement kann radial zur Werkzeugachse bzw. der Antriebswelle zwischen dem Festhohlrad und dem Gehäuse angeordnet sein. Weiter kann das Vorspannelement axial zur Werkzeugachse bzw. der Antriebswelle zwischen dem Festhohlrad und dem Gehäuse angeordnet sein. Hierbei kann das Festhohlrad und/oder der Getriebedeckel jeweils eine Aufnahme aufweisen, die axial und/oder radial an dem Festhohlrad und/oder dem Getriebedeckel ausgebildet sein kann.

In einer Ausführungsform ist eines der Vorspannelemente zwischen dem Getriebedeckel und dem Festhohlrad und eines der Vorspannelemente zwischen dem Festhohlrad und dem Getriebegehäuse angeordnet. Hierbei sind dann zumindest zwei der Vorspannelemente vorgesehen. Dabei ist dann jeweils eines der Vorspannelemente axial zur Werkzeugachse bzw. der Antriebswelle zwischen dem Getriebedeckel und dem Festhohlrad und eines der Vorspannelemente axial zur Werkzeugachse bzw. der Antriebswelle zwischen dem Festhohlrad und dem Getriebegehäuse angeordnet.

Das Getriebe und/oder das Schlagwerk kann die Rutschkupplung aufweisen. Die Rutschkupplung kann zumindest das Festhohlrad sowie das Festlegungselement und/oder das Vorspannelement aufweisen. Die Rutschkupplung ist derart ausgebildet, das Festhohlrad derart anzuordnen, dass bei dem Erreichen des Losbrechmoments das Festhohlrad zumindest teilweise bewegbar, insbesondere zumindest teilweise drehbar, ist.

### Kurze Beschreibung der Zeichnungen

Die Erfindung wird nachfolgend anhand von bevorzugten Ausführungsformen erläutert. Die Zeichnungen im Folgenden zeigen:
- Fig. 1: eine schematische Ansicht einer erfindungsgemäßen Handwerkzeugmaschine;
- Fig. 2: einen Ausschnitt eines Längsschnitts der Handwerkzeugmaschine;
- Fig. 3: einen Ausschnitt einer Frontansicht einer ersten Ausführungsform eines Festlegungselements und eines Rastelements;
- Fig. 4: den Ausschnitt mit einer zweiten Ausführungsform des Festlegungselements und des Rastelements in einer perspektivischen Ansicht;
- Fig. 5a: den Ausschnitt mit einer dritten Ausführungsform des Festlegungselements und des Rastelements in einer perspektivischen Rückansicht;
- Fig. 5b: einen unteren Ausschnitt mit der dritten Ausführungsform des Festlegungselements und des Rastelements in einem Längsschnitt;
- Fig. 6: einen oberen Ausschnitt eines Längsschnitts mit einer ersten Ausführungsform eines Vorspannelements;
- Fig. 7: den oberen Ausschnitt des Längsschnitts mit einer zweiten Ausführungsform des Vorspannelements;
- Fig. 8a: den oberen Ausschnitt des Längsschnitts mit einer dritten Ausführungsform des Vorspannelements;

- Fig. 8b: den oberen Ausschnitt des Längsschnitts mit einer vierten Ausführungsform des Vorspannelements;
- Fig. 9a: den oberen Ausschnitt des Längsschnitts mit einer fünften Ausführungsform des Vorspannelements;
- Fig. 9b: den oberen Ausschnitt des Längsschnitts mit einer sechsten Ausführungsform des Vorspannelements;
- Fig. 9c: den oberen Ausschnitt des Längsschnitts mit einer siebten Ausführungsform des Vorspannelements;
- Fig. 9d: den oberen Ausschnitt des Längsschnitts mit einer achten Ausführungsform des Vorspannelements;
- Fig. 10a: den oberen Ausschnitt des Längsschnitts mit einer neunten Ausführungsform des Vorspannelements;
- Fig. 10b: den oberen Ausschnitt des Längsschnitts mit einer zehnten Ausführungsform des Vorspannelements;
- Fig. 10c: den oberen Ausschnitt des Längsschnitts mit einer elften Ausführungsform des Vorspannelements;

### Beschreibung der Ausführungsbeispiele

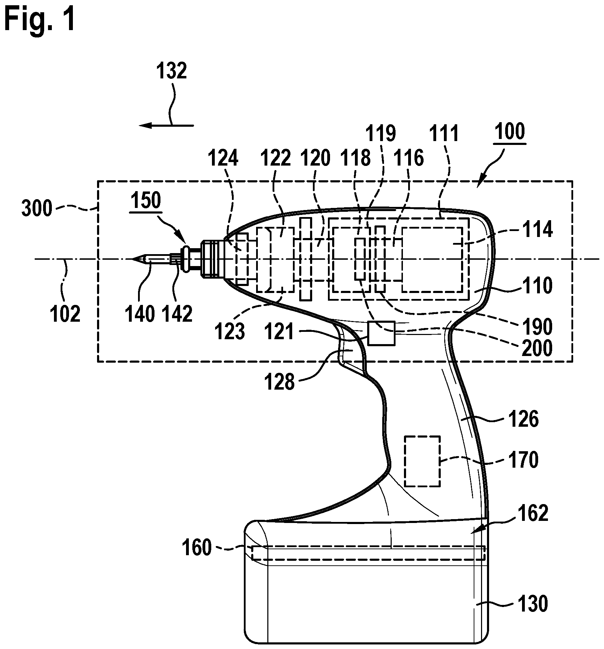

Fig. 1 zeigt eine erfindungsgemäße Handwerkzeugmaschine 100, die als ein beispielhafter Akku-Drehschlagschrauber 100 ausgebildet ist. Die Handwerkzeugmaschine 100 umfasst eine Abtriebswelle 124 und eine Werkzeugaufnahme 150. Die Handwerkzeugmaschine 100 weist ein Gehäuse 110 mit einem Handgriff 126 auf. Die Handwerkzeugmaschine 100 ist zu einer netzunabhängigen Stromversorgung mechanisch und elektrisch mit einer Energieversorgung für einen Akkubetrieb verbindbar, sodass die Handwerkzeugmaschine 100 als akkubetriebene Handwerkzeugmaschine 100 ausgebildet ist. Als Energieversorgung dient hier ein Handwerkzeugmaschinenakkupack 130.

Die vorliegende Erfindung ist jedoch nicht auf akkubetriebene Handwerkzeugmaschinen beschränkt, sondern kann auch bei netzabhängigen, also netzbetriebenen, Handwerkzeugmaschinen angewendet werden.

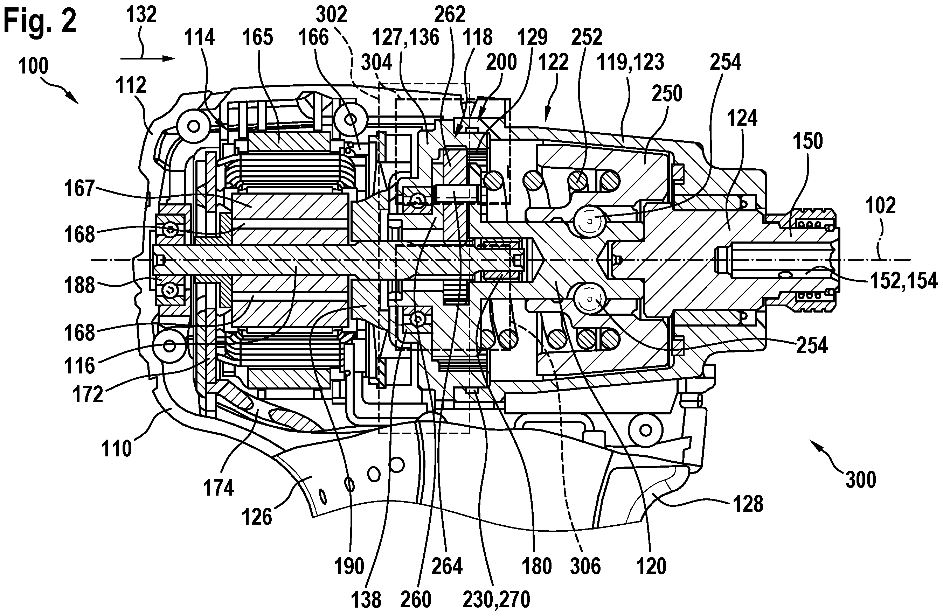

Das Gehäuse 110 umfasst dabei eine Antriebseinheit 111. Die Antriebseinheit 111 ist in dem Gehäuse 110 angeordnet. Die Antriebseinheit 111 umfasst einen elektrisch kommutierten Antriebsmotor 114 welcher von dem Handwerkzeugmaschinenakkupack 130 mit Strom versorgt wird, und ein Getriebe 118. Der Antriebsmotor 114 umfasst einen Stator 165, Motorterminals 166, einen Rotor 167 und Rotormagnete 168, siehe auch Fig. 2. Das Getriebe 118 ist als zumindest ein Planetengetriebe ausgebildet. Der Antriebsmotor 114 ist derart ausgelegt, dass er beispielsweise über einen Handschalter 128 betätigbar ist, sodass der Antriebsmotor 114 ein- und ausschaltbar ist. Vorteilhaft ist der Antriebsmotor 114 elektronisch steuer- und/oder regelbar, sodass ein Reversierbetrieb, sowie eine gewünschte Drehgeschwindigkeit, realisierbar sind. Für den Reversierbetrieb weist die Handwerkzeugmaschine 100 einen Drehrichtungsumschaltelement 121 auf, das als ein Drehrichtungsumschalter ausgebildet ist. Das Drehrichtungsumschaltelement 121 ist dazu ausgebildet, den Antriebsmotor 114 zwischen einer Rechtslaufdrehrichtung und einer Linkslaufdrehrichtung umzuschalten. Der Aufbau und die Funktionsweise eines geeigneten Antriebsmotors sind dem Fachmann hinlänglich bekannt, weshalb hier nicht näher darauf eingegangen wird.

Das Gehäuse 110 nimmt zumindest teilweise den Antriebsmotor 114, das Getriebe 118 und die Werkzeugaufnahme 150 auf. Das Gehäuse 110 ist hier als ein Schalengehäuse mit zwei Halbschalen 112 ausgeformt.

Das Getriebe 118 ist mit dem Antriebsmotor 114 über eine Antriebswelle 116 verbunden. Die Antriebswelle 116 ist mittels eines Antriebswellenlagers 180 und eines weiteren Antriebswellenlagers 188 in dem Gehäuse 110 gelagert, siehe hierzu Fig. 2. Das Getriebe 118 ist dazu vorgesehen, eine Drehung der Antriebswelle 116 in eine Drehung zwischen dem Getriebe 118 und der Werkzeugaufnahme 150 umzuwandeln. Das Getriebe 118 umfasst ein Getriebegehäuse 119, einen Getriebedeckel 136 und ein Festhohlrad 129, wobei der Getriebedeckel 136 das Getriebegehäuse 119 zumindest abschnittsweise verschließt. Dabei ist das Festhohlrad 129 derart angeordnet, dass ein Losbrechmoment des Festhohlrads 129 kleiner oder gleich einem maximalen Drehmoment der Handwerkzeugmaschine 100 ist. So umfasst die Handwerkzeugmaschine 100 eine Rutschkupplung 200, die mittels des Festhohlrads 129 blockierende Betriebszustände zumindest des Getriebes 118 entgegenwirkt, siehe auch Fig. 2 bis 10.

Die als Akku-Drehschlagschrauber ausgebildete Handwerkzeugmaschine 100 umfasst ein Drehschlagwerk 122 mit einer Zwischenwelle 120, siehe auch Fig. 2. Sowohl das Drehschlagwerk 122 als auch die Zwischenwelle 120 sind in dem Gehäuse 110 angeordnet. Bevorzugt erfolgt die Umwandlung von der Drehung der Antriebswelle 116 in eine Drehung der Werkzeugaufnahme 150 über die Zwischenwelle 120. Dabei dreht sich die Zwischenwelle 120 relativ zur Antriebswelle 116 mit vergrößertem Drehmoment, aber mit einer verringerten Drehgeschwindigkeit. Hier ragt die Antriebswelle 116 beispielhaft in die Zwischenwelle 120 hinein, siehe Fig. 2. Dabei ist hier beispielhaft das Antriebswellenlager 180 im Wesentlichen in der Zwischenwelle 120 angeordnet, sodass die Antriebswelle 116 mittels des Antriebswellenlagers 180 im Wesentlichen in der Zwischenwelle 120 gelagert ist. Das Drehschlagwerk 122 umfasst ein Schlagwerkgehäuse 123, wobei das Drehschlagwerk 122 auch in einem anderen geeigneten Gehäuse, wie beispielsweise dem Getriebegehäuse 119, angeordnet sein kann. Das Drehschlagwerk 122 ist zum Antrieb der Abtriebswelle 124 ausgebildet. Das Drehschlagwerk 122 umfasst einen Schlagwerkdeckel 127, der das Drehschlagwerk 122 in Richtung zu dem Antriebsmotor 114 abschließt. Beispielhaft sind hier der Getriebedeckel 136 und der Schlagwerkdeckel 127 einstückig. Zudem sind hier beispielhaft das Getriebegehäuse 119 und das Schlagwerkgehäuse 123 einstückig. Das Getriebe 118 und/oder das Drehschlagwerk 122 umfassen die Rutschkupplung 200. Die Rutschkupplung 200 ist zwischen dem Festhohlrad 129 und dem Getriebedeckel 136 und/oder zwischen dem Festhohlrad 129 und dem Getriebegehäuse 119 angeordnet und/oder ausgebildet.

Weiter umfasst die Handwerkzeugmaschine 100 ein Lüfterrad 190. Das Lüfterrad 190 ist dazu vorgesehen, einen Luftstrom in dem Gehäuse 110 zu erzeugen. Die Handwerkzeugmaschine 100 umfasst eine Werkzeugachse 102, wobei hier eine Rotationsachse der Antriebswelle 116 die Werkzeugachse 102 ausbildet.

An der Abtriebswelle 124 ist die Werkzeugaufnahme 150 vorgesehen. Bevorzugt ist die Werkzeugaufnahme 150 an der Abtriebswelle 124 angeformt und/oder ausgebildet. Vorzugsweise ist die Werkzeugaufnahme 150 in einer von der Antriebseinheit 111 wegweisenden, axialen Richtung 132 angeordnet. Die Werkzeugaufnahme 150 ist hier als eine Innensechskantaufnahme, nach Art eines Bithalters, ausgebildet, welche dazu vorgesehen ist, ein Einsatzwerkzeug 140 aufzunehmen. Das Einsatzwerkzeug ist nach Art eines Schrauberbits mit einer Mehrkant-Außenkupplung 142 ausgeformt. Die Art des Schrauberbits, beispielsweise nach HEX-Typ, ist dem Fachmann hinlänglich bekannt. Die vorliegende Erfindung ist jedoch nicht auf eine Verwendung von HEX-Schrauberbits beschränkt, sondern auch weitere, dem Fachmann als sinnvoll erscheinende, Werkzeugaufnahmen können Anwendung finden, wie beispielsweise HEX-Bohrer, SDS-Quick-Einsatzwerkzeuge, Stecknüsse oder Rundschaftbohrfutter. Zudem sind dem Fachmann der Aufbau und die Funktionsweise eines geeigneten Bithalters hinlänglich bekannt.

Die Handwerkzeugmaschine 100 weist eine Steuereinheit 170 zumindest zur Steuerung der Antriebseinheit 111, insbesondere des Antriebsmotors 114, und eine Sensorplatine 172 zur sensorgesteuerten Kommutierung des elektrisch kommutierten Antriebsmotors 114 auf, siehe Fig. 2. Die Sensorplatine 172 ist in dem Gehäuse 110 zwischen dem Antriebsmotor 114 und dem weiteren Antriebswellenlager 188 angeordnet. Das Gehäuse 110 nimmt die Steuereinheit 170 zumindest teilweise auf. Die Sensorplatine 172 ist zur sensorgesteuerten Kommutierung des Antriebsmotors 114 mit der Steuereinheit 170 mittels Sensorkabel 174 verbunden, siehe auch Fig. 2. Die Steuereinheit 170 weist einen nicht näher dargestellten Mikroprozessor auf. Die Sensorplatine 172 umfasst drei nicht näher dargestellte Sensorelemente, die beispielhaft als Hall-Sensoren ausgeformt sind.

Zudem umfasst das Gehäuse 110 eine Energieversorgungshaltevorrichtung 160. Die Energieversorgungshaltevorrichtung 160 nimmt den Handwerkzeugmaschinenakkupack 130 auf und bildet dabei einen Standfuß 162 mit einer Standfläche aus. Der Handwerkzeugmaschinenakkupack 130 ist werkzeuglos von der Energieversorgungshaltevorrichtung 160 lösbar. Weiter weist das Gehäuse 110 den Handgriff 126 und die Energieversorgungshaltevorrichtung 160 auf. Der Handgriff 126 kann von dem Benutzer ergriffen werden. In einer Ausführungsform ist die Energieversorgungshaltevorrichtung 160 an dem Handgriff 126 angeordnet. Mittels des Standfußes 162 kann die Handwerkzeugmaschine 100 abgestellt werden.

Fig. 2 stellt einen Ausschnitt 300 eines Längsschnitts der Handwerkzeugmaschine 100 dar. Das Drehschlagwerk 122 umfasst einen Schläger 250 und eine Schlagwerkfeder 252. Der Schläger 250 ist mittels Schlagwerkkugeln 254 auf der Zwischenwelle 120 gelagert. Die Schlagwerkkugeln 254 sind dazu vorgesehen, den Schläger 250 zumindest teilweise in Richtung des Antriebsmotors 114 zu bewegen. Die Zwischenwelle 120 ist mittels eines Zwischenwellenlager 138 gelagert. Dabei ist das Zwischenwellenlager 138 hier beispielhaft im Wesentlichen in dem Getriebedeckel 136 angeordnet. Das Zwischenwellenlager 138 ist dabei radial zwischen der Zwischenwelle 120 und dem Getriebedeckel 136 angeordnet. Das Zwischenwellenlager 138 ist beispielhaft als ein Kugellager ausgebildet. Das Getriebe 118 umfasst neben dem Festhohlrad 129, einen Planetenträger 260, Planetenräder 262 und Lagerungsbolzen 264, wobei hier nur jeweils ein Planetenträger 262 und ein Lagerungsbolzen 264 dargestellt ist. Die Lagerungsbolzen 264 sind dazu ausgebildet, die Planetenräder 262 drehbar in dem Planetenträger 260 anzuordnen. Die Planetenräder 262 greifen in das Festhohlrad 129 ein. Das Festhohlrad 129 ist relativ zu dem Antriebsmotor 114, insbesondere des Stators 165 des Antriebsmotors 114, zumindest teilweise drehbar. Weiter ist das Festhohlrad 129 relativ zu dem Getriebegehäuse 118 zumindest teilweise drehbar ausgeformt. Das Festhohlrad 129 liegt hier an dem Getriebegehäuse 123 an. Die Handwerkzeugmaschine 100 umfasst zumindest ein Vorspannelement 230, 231, 232, 233, 234, 235, 236, 237, 238, 239, 240, 241, 270, das dazu ausgeformt ist, das Festhohlrad 129 zumindest teilweise vorzuspannen. Hier ist das Vorspannelement 230 als zumindest ein Dichtungselement 270 ausgeformt. Dabei ist das Dichtungselement 270 radial, insbesondere zur Werkzeugachse 102, zwischen dem Festhohlrad 129 bzw. dem Getriebedeckel 136 und dem Getriebegehäuse 119 bzw. dem Schlagwerkgehäuse 123 angeordnet.

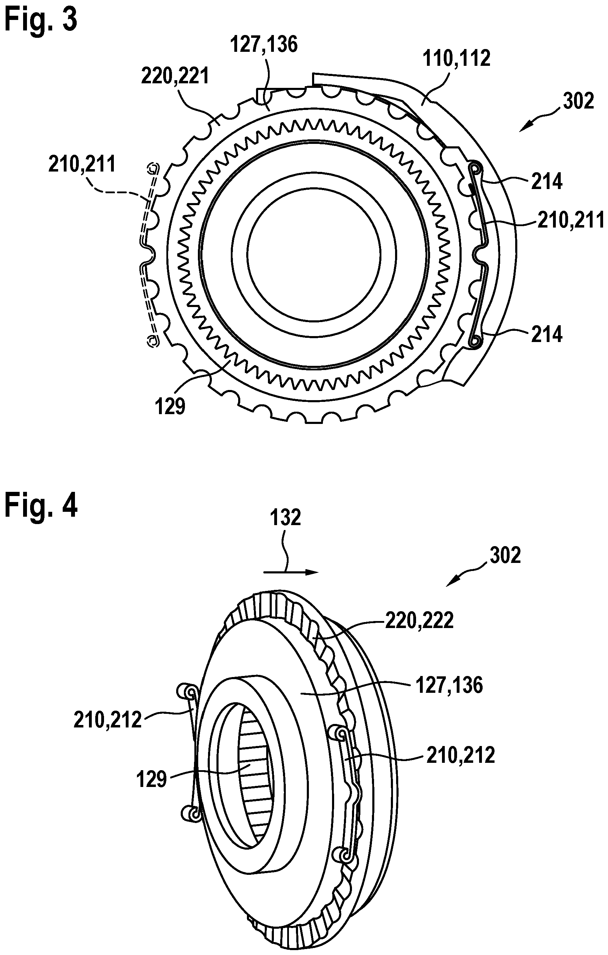

Fig. 3 zeigt einen Ausschnitt 302 einer Frontansicht einer ersten Ausführungsform eines Festlegungselements 210, 211 und eines Rastelements 220, 221. Die Frontansicht ist derart gezeigt, dass aus einer Richtung der Werkzeugaufnahme 150 in Richtung des Antriebsmotors 114 das Festhohlrad 129 gezeigt ist. Hier sind das Festhohlrad 129 und der Getriebedeckel 136 einstückig. Die Handwerkzeugmaschine 100 umfasst das Festlegungselement 210, siehe auch Fig. 4. Das Festlegungselement 210 ist dazu ausgeformt, in zumindest das Rastelement 220 des Festhohlrads 129 zumindest teilweise einzugreifen. Das Rastelement 220, 221 ist hier einstückig mit dem Festhohlrad 129. Dabei ist dann der Getriebedeckel 136 einstückig mit dem Rastelement 220. Beispielhaft sind zwei Festlegungselemente 210 ausgeformt, die, insbesondere radial, gegenüberliegend zueinander angeordnet sind. Beispielhaft sind die Festlegungselement 210 kann beispielsweise als eine Blattfeder 211 ausgeformt. Die Festlegungselement 210, 211 sind radial zwischen dem Gehäuse 110 und dem Festhohlrad 129 angeordnet. Das Rastelement 220 ist beispielshaft nach Art eines Zahnrads 221 ausgebildet. Dabei ist das Rastelement 220, 221 radial zur Werkzeugachse 102 an dem Festhohlrad 129 bzw. an dem Getriebedeckel 136 ausgeformt. Das Gehäuse 110 weist zumindest eine Aufnahme 214 für das Festlegungselement 210, 211 auf. Die Aufnahme 214 ist derart ausgebildet, jeweils eines der Festlegungselemente 210, 211 zumindest teilweise aufzunehmen und relativ zu dem Rastelement 220, 221 anzuordnen.

Fig. 4 zeigt den Ausschnitt 302 einer zweiten Ausführungsform des Festlegungselements 210, 212 und des Rastelements 220, 222 in einer perspektivischen Ansicht. Beispielhaft sind das Festhohlrad 129 und der Getriebedeckel 136 einstückig. Das Rastelement 220, 222 ist einstückig mit dem Festhohlrad 129. Es sind zwei Festlegungselemente 210, 212 ausgeformt, die als Blattfedern 212 ausgebildet sind. Die Festlegungselemente 210, 212 in der zweiten Ausführungsform sind, insbesondere radial, gegenüberliegend zueinander angeordnet. Weiter sind die Festlegungselement 210, 212 axial zwischen dem Gehäuse 110 und dem Festhohlrad 129 angeordnet. Das Festhohlrad 129 und das Rastelement 220, 222 sind einstückig, sodass auch der Getriebedeckel 136 das Rastelement 220, 222 aufweist. Das Rastelement 220 ist hier beispielhaft als ein Kronenrad 222 ausgeformt. Dabei ist das Rastelement 220, 222 axial zur Werkzeugachse 102 an dem Festhohlrad 129 bzw. an dem Getriebedeckel 136 ausgeformt.

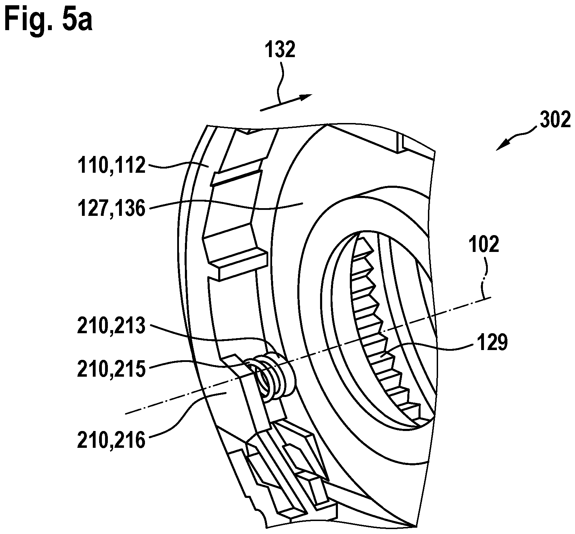

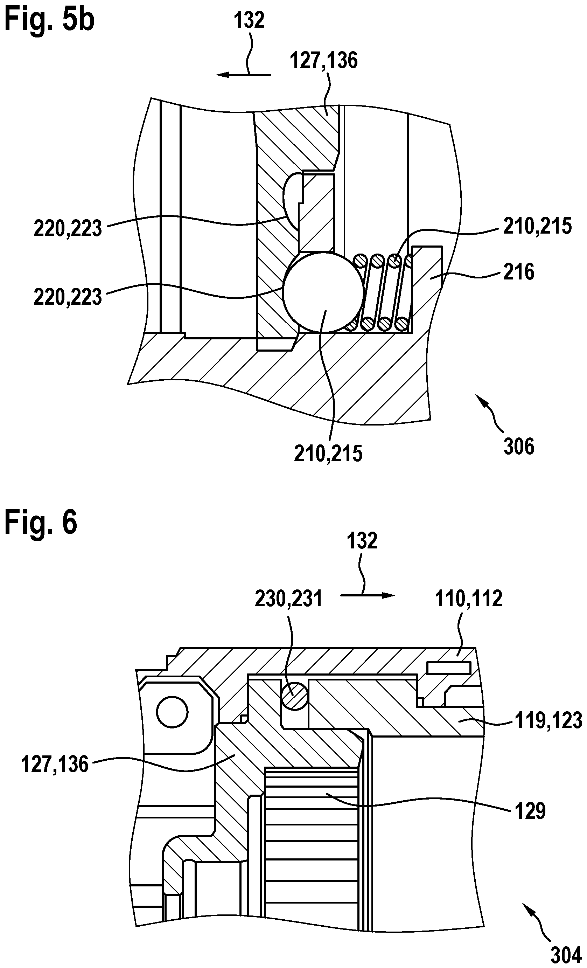

Fig. 5a stellt den Ausschnitt 302 mit einer dritten Ausführungsform des Festlegungselements 210, 213 und des Rastelements 220, 223 in einer perspektivischen Rückansicht dar. Beispielhaft sind das Festhohlrad 127 und der Getriebedeckel 136 einstückig. Das Festhohlrad 129 umfasst das Rastelement 220, 223, wobei diese einstückig sind, sodass auch der Getriebedeckel 136 und das Rastelement 220, 223 einstückig sind. Beispielsweise sind zwei Festlegungselemente 210, 213, 215 ausgeformt, wobei nur eines der Festlegungselemente 210, 213, 215 gezeigt ist. Das Festlegungselement 210 ist beispielhaft als eine Kugel 213 mit einer Spiralfeder 215 ausgeformt, wobei diese axial zwischen dem Gehäuse 110 und dem Festhohlrad 129 angeordnet sind. Hierzu weist das Gehäuse 110, eine Aufnahme 216 für das Festlegungselement 210, 213, 215 auf, an dem das Festlegungselement 210, 213, 215 anliegt. Das Rastelement 220 ist beispielhaft als ein Kranz 223 ausgeformt und axial in Richtung zu dem Antriebsmotor 114 an dem Festhohlrad 129 ausgebildet. Fig. 5b zeigt einen unteren Ausschnitt 306 mit der dritten Ausführungsform des Festlegungselements 210, 213, 215 und des Rastelements 220, 223 in einem Längsschnitt. Der untere Ausschnitt 306 ist dabei unterhalb der Werkzeugachse 102 und radial zwischen der Werkzeugachse 102 und dem Handschalter 128.

Fig. 6 zeigt einen oberen Ausschnitt 304 eines Längsschnitts mit einer ersten Ausführungsform des Vorspannelements 230, 231 als ein Federelement 231, 232, 233, 234, 235, 236, 237, 238, 239, 240, 241. Dabei ist das Vorspannelement 230 in der ersten Ausführungsform 231 gezeigt. Der obere Ausschnitt 304 ist oberhalb der Werkzeugachse 102, wobei die Werkzeugachse 102 radial zwischen dem unteren Ausschnitt 306 und dem oberen Ausschnitt 304 ist. Beispielsweise sind das Festhohlrad 129 und der Getriebedeckel 136 einstückig. Die Handwerkzeugmaschine 100 umfasst das Vorspannelement 230. Das Vorspannelement 230 ist dazu ausgeformt, das Festhohlrad 129 vorzuspannen. Das Vorspannelement 230 ist als ein Federelement ausgeformt. Hier ist das Vorspannelement 230 als ein visko-elastischer Ring 231 ausgeformt. Das Vorspannelement 230, 231 ist hier axial zwischen dem Getriebedeckel 136 und dem Getriebegehäuse 119 angeordnet.

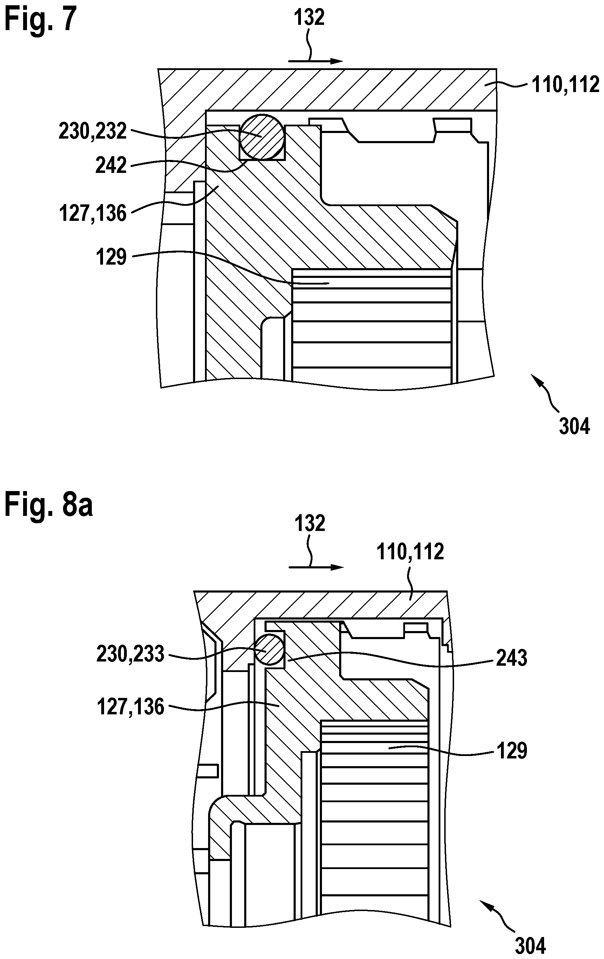

Fig. 7 zeigt den oberen Ausschnitt 304 des Längsschnitts mit einer zweiten Ausführungsform des Vorspannelements 230, 232 als das Federelement. Beispielhaft sind das Festhohlrad 129 und der Getriebedeckel 136 einstückig. In der zweiten Ausführungselement ist das Vorspannelement 230 als ein visko-elastischer Ring 232 ausgeformt, der radial zwischen dem Getriebedeckel 136 und dem Gehäuse 110 angeordnet ist. Der Getriebedeckel 136 umfasst eine Aufnahme 242 für das Vorspannelement 230, 232, wobei die Aufnahme 242 für das Vorspannelement 230, 232 beispielhaft als Ringnut ausgebildet ist. Die Aufnahme 242 für das Vorspannelement 230, 232 ist radial und umlaufend an dem Getriebedeckel 136 ausgeformt.

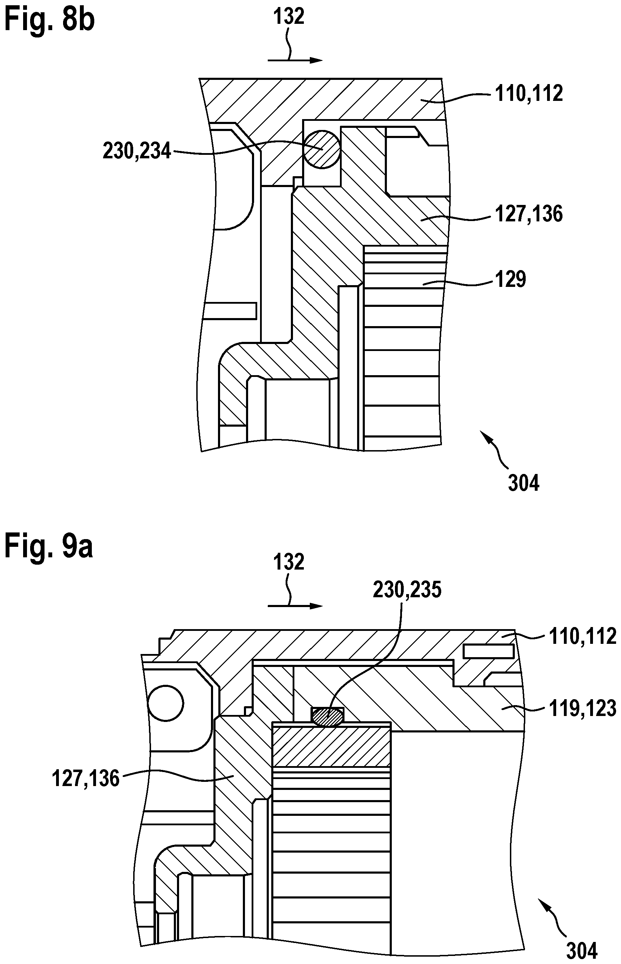

Fig. 8a zeigt den oberen Ausschnitt 304 des Längsschnitts mit einer dritten Ausführungsform des Vorspannelements 230, 233 als das Federelement. Fig. 8b stellt den oberen Ausschnitt 304 des Längsschnitts mit einer vierten Ausführungsform des Vorspannelements 230, 234 als das Federelement dar. Sowohl in Fig. 8a als auch in Fig. 8b sind das Festhohlrad 129 und der Getriebedeckel 136 einstückig. In der dritten Ausführungsform ist das Vorspannelement 230 als ein ein visko-elastischer Ring 233 ausgeformt. In der vierten Ausführungsform ist das Vorspannelement 230 auch als ein visko-elastischer Ring 234 ausgebildet. Das Vorspannelement 230 in der dritten und vierten Ausführungsform 233, 234 ist, insbesondere axial zur Werkzeugachse 102, zwischen dem Getriebedeckel 136 und dem Gehäuse 110 angeordnet. In Fig. 8a umfasst der Getriebedeckel 136 eine Aufnahme 243 für das Vorspannelement 230 in der dritten Ausführungsform 233. Die Aufnahme 243 für das Vorspannelement 230 in der dritten Ausführungsform 233 ist beispielhaft als eine Ringnut ausgeformt. Die Aufnahme 243 für das Vorspannelement 230, 233 nimmt das Vorspannelement 230 in der dritten Ausführungsform 233 in Umfangsrichtung auf. Die Aufnahme 243 für das Vorspannelement 230, 233 ist radial zur Werkzeugachse 102 zwischen dem Festhohlrad 129 und dem Gehäuse 110 ausgeformt und in Umfangsrichtung ausgebildet. In Fig. 8b liegt das Vorspannelement 230 in der vierten Ausführungsform 234 an dem Getriebegehäuse 136 in Umfangsrichtung zur Werkzeugachse 102 an.

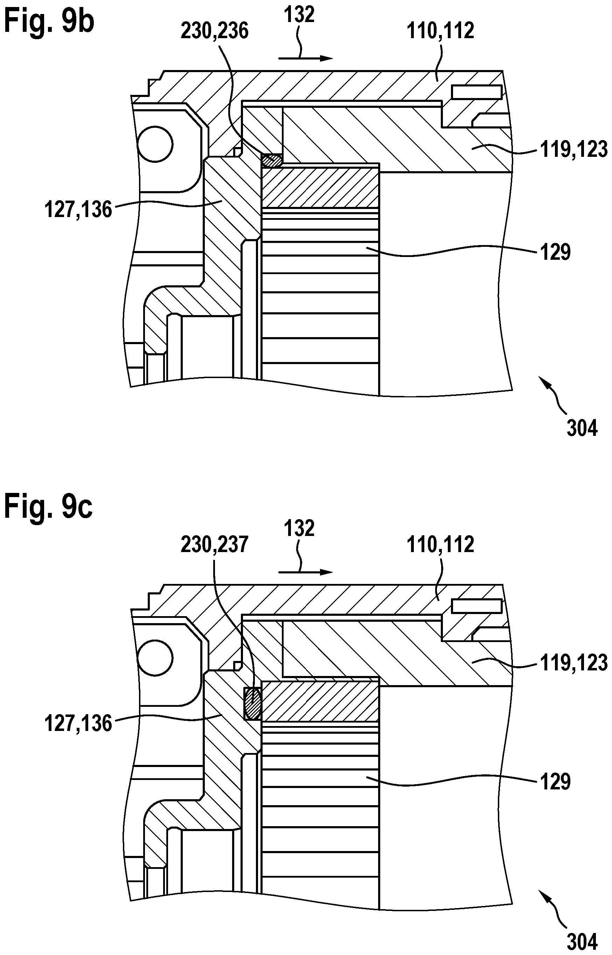

Fig. 9a bis 9d zeigenden oberen Ausschnitt 304 des Längsschnitts mit einer fünften, einer sechsten, einer siebten und einer achten Ausführungsform des Vorspannelements 230, 235, 236, 237, 238 als das Federelement. In den Fig. 9a bis 9d sind das Getriebegehäuse 136, das Festhohlrad 129 und das Getriebegehäuse 119 separate Bauteile und können jeweils aneinander anliegen. In Fig. 9a ist die fünfte Ausführungsform 235 des Vorspannelements 230 gezeigt. Die fünfte Ausführungsform des Vorspannelements 230 ist als ein visko-elastischer Ring 235 ausgebildet. In der fünften Ausführungsform 235 des Vorspannelements 230 ist das Vorspannelement 230, 235 radial, insbesondere zur Werkzeugachse 102, zwischen dem Festhohlrad 129 und dem Getriebegehäuse 119 angeordnet. In Fig. 9b ist die sechste Ausführungsform 236 des Vorspannelements 230 gezeigt, die als ein visko-elastischer Ring 236 ausgeformt ist.

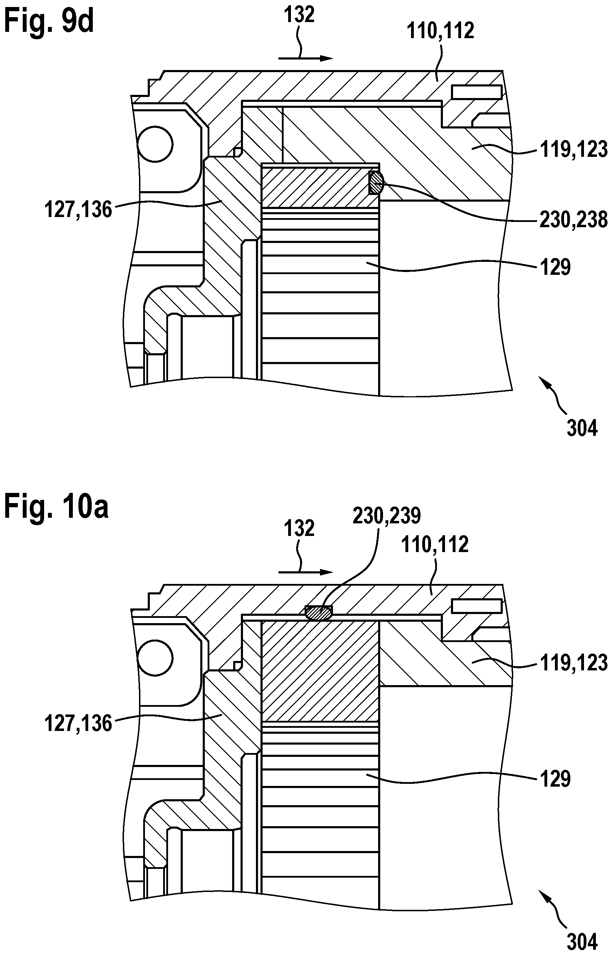

Die sechste Ausführungsform 236 des Vorspannelements 230 ist radial, insbesondere zur Werkzeugachse 102, zwischen dem Festhohlrad 129 und dem Getriebedeckel 136 angeordnet. In Fig. 9c ist die siebte Ausführungsform 237 des Vorspannelements 230 dargestellt. Ausgeformt ist die siebte Ausführungsform des Vorspannelements 230 ist als ein visko-elastischer Ring 237. Die siebte Ausführungsform 237 des Vorspannelements 230 ist axial, insbesondere zur Werkzeugachse 102, zwischen dem Festhohlrad 129 und dem Getriebedeckel 136 angeordnet. In Fig. 9d ist die achte Ausführungsform 238 des Vorspannelements 230 dargestellt. Die achte Ausführungsform des Vorspannelements 230 ist als ein visko-elastischer Ring 238 ausgebildet. Die achte Ausführungsform 238 des Vorspannelements 230 ist axial, insbesondere zur Werkzeugachse 102, zwischen dem Festhohlrad 129 und dem Getriebegehäuse 119 angeordnet.

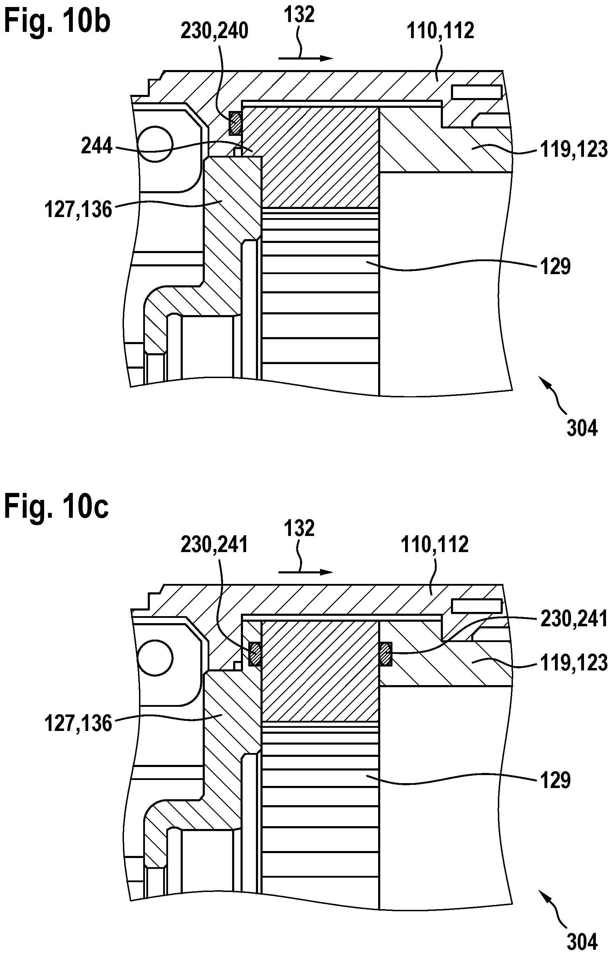

Fig. 10a bis Fig. 10c zeigen jeweils den oberen Ausschnitt 304 des Längsschnitts mit einer neunten, zehnten und elften Ausführungsform 239, 240, 241 des Vorspannelements 230 als das Federelement. In Fig. 10a, 10b, 10c sind der Getriebedeckel 136, das Festhohlrad 129 und das Getriebegehäuse 119 jeweils separate Bauteile und axial zueinander angeordnet. In Fig. 10a und Fig. 10b liegt das Festhohlrad 129 an dem Getriebedeckel 136 und dem Getriebegehäuse 119 an. Das Festhohlrad 129 ist in Fig. 10a und Fig. 10b relativ zu dem Getriebedeckel 126 zumindest teilweise drehbar ausgeformt. In Fig. 10a ist die neunte Ausführungsform 239 des Vorspannelements 230 gezeigt, wobei die neunte Ausführungsform des Vorspannelements 230 als ein visko-elastischer Ring 239 ausgeformt ist. In der neunten Ausführungsform 239 des Vorspannelements 230 ist das Vorspannelement 230, 239 radial, insbesondere zur Werkzeugachse 102, zwischen dem Festhohlrad 129 und dem Gehäuse 110 angeordnet. In Fig. 10b ist die zehnte Ausführungsform 240 des Vorspannelements 230 dargestellt, die als ein visko-elastischer Ring 240 ausgebildet ist. Die zehnte Ausführungsform 240 des Vorspannelements 230 ist axial, insbesondere zur Werkzeugachse 102, zwischen dem Festhohlrad 129 und dem Gehäuse 110 angeordnet. Hier weist das Festhohlrad 129 beispielhaft einen umlaufenden Vorsprung 244 auf. Die zehnte Ausführungsform 240 des Vorspannelements 230 liegt an dem umlaufenden Vorsprung 244 an. In Fig. 10c ist die elfte Ausführungsform 241 des Vorspannelements 230 gezeigt. Die elfte Ausführungsform des Vorspannelements 230 als zwei visko-elastische Ringe 241 ausgeformt. Bei der elften Ausführungsform 241 des Vorspannelements 230 ist einer der Vorspannelemente 230, 241 axial, insbesondere zur Werkzeugachse 102, zwischen dem Getriebedeckel 136 und dem Festhohlrad 129 und einer der Vorspannelemente 230, 241 axial, insbesondere zur Werkzeugachse 102, zwischen dem Festhohlrad 129 und dem Getriebegehäuse 119 angeordnet.

## Patentansprüche

1. Handwerkzeugmaschine (100) mit einem Gehäuse (110), mit einem Antriebsmotor (114), der eine Antriebswelle (116) aufweist, mit einem mittels der Antriebswelle (116) antreibbaren Getriebe (118), wobei das Getriebe (118) ein Getriebegehäuse (119), einen Getriebedeckel (136) und ein Festhohlrad (129) aufweist, wobei der Getriebedeckel (136) das Getriebegehäuse (119) zumindest abschnittsweise verschließt, und mit einer Werkzeugaufnahme (150) zur Aufnahme eines Einsatzwerkzeugs (140), wobei die Werkzeugaufnahme (150) mittels des Getriebes (118) antreibbar ist, **dadurch gekennzeichnet, dass**
das Festhohlrad (129) derart angeordnet ist, dass das Festhohlrad (129) ein Losbrechmoment aufweist.

2. Handwerkzeugmaschine (100) nach Anspruch 1, **dadurch gekennzeichnet, dass** das Losbrechmoment des Festhohlrads (129) kleiner oder gleich einem maximalen Drehmoment ist.

3. Handwerkzeugmaschine (100) nach Anspruch 1 oder 2, **dadurch gekennzeichnet, dass** das Festhohlrad (129) relativ zu dem Antriebsmotor (114), insbesondere eines Stators (165) des Antriebsmotors (114), zumindest teilweise drehbar ist.

4. Handwerkzeugmaschine (100) nach einem der Ansprüche 1 bis 3, **dadurch gekennzeichnet, dass** das Festhohlrad (129) relativ zu dem Getriebegehäuse (119) zumindest teilweise drehbar ausgebildet ist.

5. Handwerkzeugmaschine (100) nach einem der Ansprüche 1 bis 4, **gekennzeichnet durch** zumindest ein Festlegungselement (210, 211, 212, 213, 215), das dazu ausgebildet ist, in zumindest ein Rastelement (220, 221, 222, 223) des Festhohlrads (129) zumindest teilweise einzugreifen.

6. Handwerkzeugmaschine (100) nach einem der vorhergehenden Ansprüche, **gekennzeichnet durch** zumindest ein Vorspannelement (230, 231, 232, 233, 234, 235, 236, 237, 238, 239, 240, 241, 270), das dazu ausgebildet ist, das Festhohlrad (129) zumindest teilweise vorzuspannen.

7. Handwerkzeugmaschine (100) nach Anspruch 6, **dadurch gekennzeichnet, dass** das Vorspannelement (230, 231, 232, 233, 234, 235, 236, 237, 238, 239, 240, 241, 270) als zumindest ein Federelement (231, 232, 233, 234, 235, 236, 237, 238, 239, 240, 241) und/oder als zumindest ein Dichtungselement (270) ausgebildet ist.

8. Handwerkzeugmaschine (100) nach Anspruch 6 oder 7, **dadurch gekennzeichnet, dass** das Vorspannelement (230, 231, 232, 233, 234, 235, 236, 237, 238, 239, 240, 241, 270) zwischen dem Getriebedeckel (136) und dem Getriebegehäuse (119) angeordnet ist.

9. Handwerkzeugmaschine (100) nach Anspruch 6 oder 7, **dadurch gekennzeichnet, dass** das Vorspannelement (230, 231, 232, 233, 234, 235, 236, 237, 238, 239, 240, 241, 270) zwischen dem Getriebedeckel (136) und dem Gehäuse (110) angeordnet ist.

10. Handwerkzeugmaschine (100) nach Anspruch 6 oder 7, **dadurch gekennzeichnet, dass** das Vorspannelement (230, 231, 232, 233, 234, 235, 236, 237, 238, 239, 240, 241, 270) zwischen dem Festhohlrad (129) und dem Getriebegehäuse (119) angeordnet ist.

11. Handwerkzeugmaschine (100) nach Anspruch 6 oder 7, **dadurch gekennzeichnet, dass** das Vorspannelement (230, 231, 232, 233, 234, 235, 236, 237, 238, 239, 240, 241, 270) zwischen dem Festhohlrad (129) und dem Getriebedeckel (136) angeordnet ist.

12. Handwerkzeugmaschine (100) nach Anspruch 6 oder 7, **dadurch gekennzeichnet, dass** das Vorspannelement (230, 231, 232, 233, 234, 235, 236, 237, 238, 239, 240, 241, 270) zwischen dem Festhohlrad (129) und dem Gehäuse (110) angeordnet ist.
